# EUROPEAN PATENT SPECIFICATION

(11) **EP 3 059 426 B1**
(45) Date of publication and mention of the grant of the patent: **18.10.2017**
(21) Application number: 16151794.1
(22) Date of filing: 19.01.2016
(51) Int. Cl.: F02D 41/00, F02B 27/02, F02B 29/08, F02D 17/02

(54) **CONTROL DEVICE FOR INTERNAL COMBUSTION ENGINE**
STEUERUNGSVORRICHTUNG FÜR VERBRENNUNGSMOTOR
DISPOSITIF DE CONTRÔLE POUR MOTEUR À COMBUSTION INTERNE

(30) Priority: 20.02.2015 JP 2015032214
(43) Date of publication of application: 24.08.2016
(73) Proprietor: Toyota Jidosha Kabushiki Kaisha, Aichi-ken 471-8571 (JP)
(72) Inventor: IWATA, Kazuyasu, Toyota-shi, Aichi-ken,471-8571 (JP)
(74) Representative: Winter, Brandl, Fürniss, Hübner, Röss, Kaiser, Polte - Partnerschaft mbB

(56) References cited:
- AU-A4- 2013 101 712
- JP-A- 2008 106 615
- JP-A- 2008 274 833

## Description

### BACKGROUND OF THE INVENTION

### Field of the Invention

The present invention relates to a control device for an internal combustion engine according to the preamble of claim 1.

### Background Art

A turbo-supercharger is driven by exhaust gas to perform work with respect to intake air. The energy of exhaust gas that is received by the turbo-supercharger periodically changes according to the cycle of the internal combustion engine, and becomes a local maximum when an exhaust stroke arrives in the respective cylinders. Consequently, the power of the turbo-supercharger with respect to the intake air also changes periodically, and this produces periodic changes in the pressure, that is, pulsation, of the intake air. Pulsation of the intake air affects the volumetric efficiency of air that enters a cylinder.

The lower the intake air pressure is when an intake valve is open, the lower the volumetric efficiency of a cylinder will be. Therefore, in a case where a local minimum point of a pulsation of intake air pressure exists within an opening period of the intake valve, the volumetric efficiency will decrease in comparison to a case where there is no pulsation. In order to suppress the negative influence of a pulsation on the volumetric efficiency, it is desirable to suppress the pulsation itself.

As a method for suppressing a pulsation that arises in an intake passage, for example, as disclosed in JP 2005-344642 A, a method is known in which a variable chamber whose capacity is variable is attached to an independent intake passage that is provided for each cylinder, and the capacity of the variable chamber is changed based on the load and the rotational speed of the internal combustion engine.

JP2008274833 discloses a similar method.

### Summary of the Invention

However, the technology disclosed in JP 2005-344642 A requires space for providing a variable chamber for each cylinder, and thus places constraints on the layout of the internal combustion engine. A method may be considered in which the intake air volume is increased by designing the intake passage to have a large effective volume to thereby attenuate pulsations, however, an increase in the intake air volume leads to a decrease in response. In addition, a method may be considered in which pulsations are attenuated by mechanically extending the length of the intake passage, however, changing the length of the intake passage is not easy.

The present invention has been made to solve the above-described problem, and an object of the present invention is to provide a control device for an internal combustion engine that is configured to suppress a decrease in volumetric efficiency due to the influence of a pulsation of the intake air pressure that the turbo-supercharger generates.

A control device for an internal combustion engine according to the present invention is a control device that is applied to an internal combustion engine including: a first supercharger that is driven by exhaust gas; a second supercharger that is disposed downstream relative to the first supercharger in an intake passage, and is driven by a motive power other than exhaust gas; a bypass passage that bypasses the second supercharger; and a bypass valve that opens and closes the bypass passage. The second supercharger may be an electric supercharger that is driven by an electric motor. The present control device includes determination means for determining whether or not the internal combustion engine is in a specific operating state where a local minimum point of a pulsation of an intake air pressure exists within an opening period of an intake valve. The present control device also includes operation means for operating the second supercharger and the bypass valve based on a determination result of the determination means. The operation means is configured so that, in a case where it is determined by the determination means that the internal combustion engine is in the specific operating state, the operation means actuates the second supercharger at a previously set rotational speed for pulsation suppression and also opens the bypass valve to a previously set opening degree for pulsation suppression.

According to the present control device that is configured as described above, under circumstances in which a local minimum point of a pulsation of the intake air pressure exists within an opening period of the intake valve, since the second supercharger is actuated and the bypass valve is opened, intake air passes through both of the intake passage in which the second supercharger is disposed and the bypass passage. By this means, the total flow path length through which the intake air actually flows is extended, and thus the intake air volume is increased artificially. Attenuation of a pulsation of the intake air pressure that the first supercharger generates is promoted by this artificial increase in the intake air volume, and thus a decrease in the volumetric efficiency due to the influence of the pulsation is suppressed.

A rotational speed of the second supercharger in the specific operating state may be set to a lower rotational speed than a rotational speed in a case of assisting supercharging by the first supercharger by means of supercharging by the second supercharger. Since the above described effect is one that is obtained as a result of intake air passing through the second supercharger, the rotational speed of the second supercharger may be low in the specific operating state. Consumption of energy is suppressed by suppressing the rotational speed of the second supercharger.

The present control device may be applied to an internal combustion engine that is equipped with a cylinder halting device that halts one or more cylinders. Intake air pulsations are created by the first supercharger being driven by exhaust gas, and the intake air pressure increases in a period in which exhaust gas is flowing into the first supercharger, and decreases in a period in which exhaust gas is not flowing into the first supercharger. When a certain cylinder is halted by the cylinder halting device, exhaust gas does not come out from the halted cylinder, and therefore the number of local maximum points of pulsations of the intake air pressure in a single cycle is reduced by an amount corresponding to the number of halted cylinders. Therefore, a period in which the intake air pressure decreases between one local maximum point and the proximate local maximum point of a pulsation is lengthened, and a period in which the intake air pressure is decreasing is liable to overlap with an opening period of the intake valve. In particular, in a case where two cylinders are halted in a four-cylinder internal combustion engine, since the exhaust stroke of one operating cylinder will not overlap with the intake stroke of the other operating cylinder, a local minimum point of a pulsation of the intake air pressure will definitely exist within an opening period of the intake valve. Hence, when it is determined that the one or more cylinders are being halted by the cylinder halting device, it may be determined that the engine is in the specific operating state, that is, a local minimum point of a pulsation of the intake air pressure exists within an opening period of the intake valve.

Further, the phase of a pulsation with respect to an opening period of the intake valve varies depending on the rotational speed of the internal combustion engine. Depending on the rotational speed region, it is also possible for a local minimum point of a pulsation of the intake air pressure to exist within an opening period of the intake valve. Hence, when it is determined that the internal combustion engine is rotating at a speed that is in a predetermined rotational speed region, it may be determined that the engine is in the specific operating state, that is, a local minimum point of a pulsation of the intake air pressure exists within an opening period of the intake valve.

In this connection, the influence of a pulsation on the volumetric efficiency decreases relatively as the load of the internal combustion engine increases. Hence, a configuration may be adopted so as to actuate the second supercharger and also perform an operation to open the bypass valve in a case where a local minimum point of a pulsation of the intake air pressure exists within an opening period of the intake valve and the load of the internal combustion engine is less than a predetermined value. That is, a determination may be performed taking a fact that the load of the internal combustion engine is less than a predetermined value as a second condition for determining that the internal combustion engine is in a specific operating state. In a case where the load of the internal combustion engine is equal to or greater than the predetermined value, the bypass valve may be closed and the second supercharger may be caused to operate at a rotational speed that is in accordance with the load, to thus assist supercharging by the first supercharger.

The second supercharger may be an electric supercharger that is driven by an electric motor.

According to the control device for an internal combustion engine of the present invention, in an operating state in which a local minimum point of a pulsation of intake air pressure that is generated by a first supercharger exists within an opening period of an intake valve, a second supercharger is actuated and a bypass valve is also opened, and therefore intake air passes through both of the intake passage in which the second supercharger is disposed and the bypass passage. By this means, the intake air volume is increased artificially and thus attenuation of the pulsation of the intake air pressure that is generated by the first supercharger is promoted, and a decrease in the volumetric efficiency due to the influence of the pulsation is suppressed.

### Brief Description of the Drawings

Fig. 1 is a view illustrating a configuration of a system according to an embodiment;
Fig. 2 is a table showing strokes of respective cylinders in a cylinder halting operation;
Fig. 3 is a view illustrating the influence of the intake air volume on intake air pulsations;
Fig. 4 is a view illustrating the relation between an intake air volume and a volumetric efficiency ratio;
Fig. 5 is a view illustrating a flow of intake air when an electric supercharger is stopped;
Fig. 6 is a view illustrating a flow of intake air in an assisting operation;
Fig. 7 is a view illustrating the flow of intake air in a pulsation suppressing operation;
Fig. 8 is a flowchart illustrating a control procedure of the embodiment; and
Fig. 9 is a time chart illustrating operations of the system according to the control procedure of the embodiment.

### Detailed Description of the Preferred Embodiment

An embodiment of the present invention is described hereunder with reference to the accompanying drawings.

### 1. Configuration of System

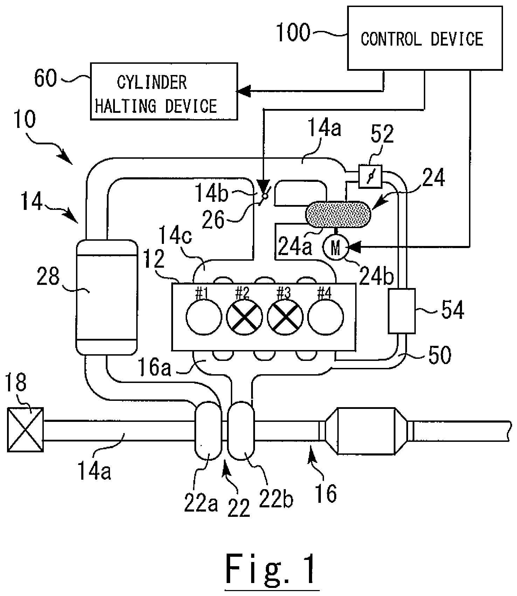

Fig. 1 is a view illustrating the configuration of a system of an embodiment of the present invention. The system shown in Fig. 1 includes an internal combustion engine 10. The internal combustion engine 10 is a diesel engine, and is mounted in a vehicle and used as a power apparatus thereof. The internal combustion engine 10 is an inline four-cylinder engine that includes four cylinders (#1, #2, #3, #4) in an engine main body 12. A cylinder halting device 60 that halts the operation of a cylinder is provided in some cylinders (for example, a second cylinder (#2) and a third cylinder (#3)) among the four cylinders (#1, #2, #3, #4) of the engine main body 12. Cylinder halting is realized by fully closing both an intake valve and an exhaust valve, and stopping fuel injection by a fuel injector.

An intake passage 14 and an exhaust passage 16 are connected to the engine main body 12 of the internal combustion engine 10. An air cleaner 18 is provided at an inlet of a main intake passage 14a of the intake passage 14. A compressor 22a of a turbo-supercharger 22 as a first supercharger for supercharging intake air is disposed in the main intake passage 14a at a position on a downstream side relative to the air cleaner 18. Hereunder, the compressor 22a is referred to as "turbo-compressor 22a". The turbo-supercharger 22 includes a turbine 22b in the exhaust passage 16. The turbo-compressor 22a is integrally connected to the turbine 22b through a connecting shaft, and is driven by exhaust gas that flows into the turbine 22b.

An intercooler 28 for cooling intake air that was compressed by the turbo-compressor 22a is disposed in the main intake passage 14a at a position on the downstream side relative to the turbo-compressor 22a. Further, a compressor 24a of an electric supercharger 24 as a second supercharger is also disposed in the main intake passage 14a on the downstream side relative to the intercooler 28. Hereunder, the compressor 24a is referred to as "electric compressor 24a". The electric compressor 24a is driven by an electric motor 24b. Electric power from a battery (not shown in the drawings) is supplied to the electric motor 24b.

The intake passage 14 includes a bypass passage 14b that bypasses the electric compressor 24a. A bypass valve 26 that opens and closes the bypass passage 14b is arranged in the bypass passage 14b. Although in Fig. 1 the bypass valve 26 is provided at the center of the bypass passage 14b, as long as the bypass passage 14b can be opened and closed, the bypass valve 26 may be provided at a branch point or a merging point with the bypass passage 14b. The main intake passage 14a is connected to an intake manifold 14c on a downstream side of a position at which the bypass passage 14b merges with the main intake passage 14a. The intake manifold 14c distributes intake air to each cylinder.

Exhaust gas from the respective cylinders is collected by an exhaust manifold 16a of the exhaust passage 16, and sent to the turbine 22b. The exhaust manifold 16a is connected to the main intake passage 14a at a position between the intercooler 28 and the electric compressor 24a by an EGR passage 50. An EGR cooler 54 for cooling EGR gas is disposed in the EGR passage 50. An EGR valve 52 that opens and closes the EGR passage 50 is disposed in the EGR passage 50 at a position that is on the downstream side relative to the EGR cooler 54.

The system illustrated in Fig. 1 includes a control device 100 that controls the internal combustion engine 10. The control device 100 is an ECU. The control device 100 includes at least an input/output interface, a memory and a CPU. The input/output interface is provided in order to take in sensor signals from various sensors installed in the internal combustion engine 10 and the vehicle in which the internal combustion engine 10 is mounted, and to also output actuating signals to actuators provided in the internal combustion engine 10. Various control programs and maps for controlling the internal combustion engine 10 are stored in the memory. The CPU reads out a control program from the memory and executes the control program, and generates actuating signals based on sensor signals that were taken in.

### 2. Issue in Cylinder Halting Operation

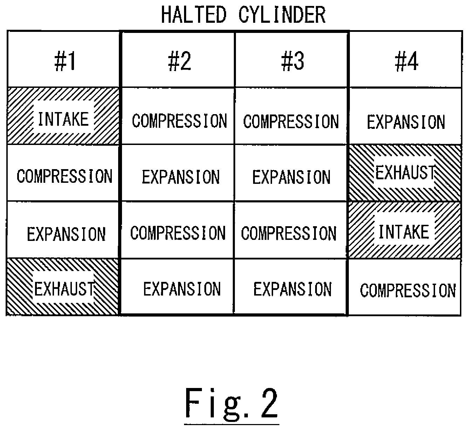

Strokes of the respective cylinders during a cylinder halting operation in the internal combustion engine 10 are shown in a table in Fig. 2. For a first cylinder (#1) and a fourth cylinder (#4) that are operating cylinders, an intake stroke, a compression stroke, an expansion stroke and an exhaust stroke are repeated in that order. In contrast, for a second cylinder (#2) and a third cylinder (#3) that are halted cylinders, a compression stroke and an expansion stroke are repeated. By halting some cylinders in this manner, pumping loss, friction loss, cooling loss and the like decrease and fuel consumption improves.

However, on the other hand, the following issue exists with regard to the cylinder halting operation.

Exhaust gas flows into the turbine 22b of the turbo-supercharger 22 during the exhaust stroke of each cylinder, and work with respect to intake air is performed by the turbo-compressor 22a as a result of the turbine 22b being rotated by exhaust energy and the turbo-compressor 22a being driven. Consequently, the power of the turbo-compressor 22a with respect to the intake air periodically changes according to the cycle of the internal combustion engine 10, and becomes a maximum when the exhaust stroke of the respective cylinders arrives. As a result, with a cycle at which an exhaust stroke arrives, a pulsation is generated in the supercharging pressure that is the pressure of the intake air downstream of the turbo-compressor 22a.

In the case of the internal combustion engine 10 that is an inline four-cylinder engine, because the explosion interval for the respective cylinders is staggered by 180 degrees for each cylinder, the exhaust stroke of a certain cylinder overlaps with an intake stroke of some other cylinder. Therefore, a pulsation that arises in intake air due to the action of the turbo-supercharger 22 has an effect of promoting the flow of intake air into a cylinder and thereby improving the volumetric efficiency. However, when a cylinder halting operation is being performed, as shown in the table in Fig. 2, an exhaust stroke of the respective operating cylinders does not overlap with an intake stroke of another cylinder.

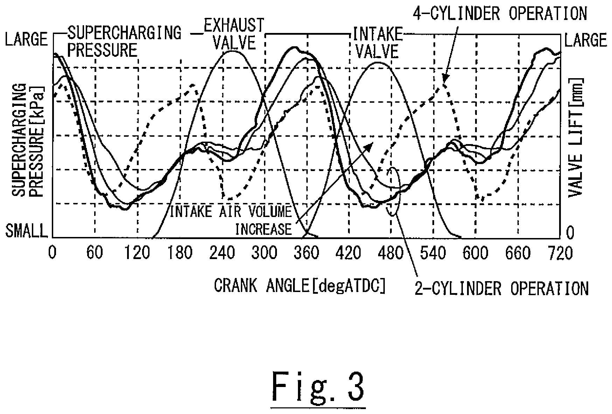

In Fig. 3, a waveform (indicated by a broken line) of the supercharging pressure in four-cylinder operation, a waveform (indicated by a solid line) of the supercharging pressure in two-cylinder operation with the cylinder halting operation, and opening periods of an exhaust valve and an intake valve are drawn on the same crank angle axis. Although a plurality of waveforms of the supercharging pressure in two-cylinder operation are drawn in the figure, the capacity of the intake manifold 14c is different for the respective waveforms. A plurality of intake manifolds 14c of differing capacities were prepared, and waveforms of the supercharging pressure in two-cylinder operation were measured for each capacity. The plurality of waveforms shown in Fig. 3 were obtained in this way. The waveforms of the supercharging pressure were measured in the vicinity of the intake valve.

In the waveform of the supercharging pressure during four-cylinder operation, four local maximum points can exist in a single cycle in correspondence to the exhaust strokes of the respective cylinders. Since a time lag exists from a time that the exhaust valve opens until the supercharging pressure rises, the mountain-like shape of the waveform of the supercharging pressure and the opening period of the intake valve do not overlap at all. However, if even a part of the mountain-like shape of the waveform of the supercharging pressure overlaps with a part of the opening period of the intake valve, the flow of intake air into a cylinder during that period will be promoted and the volumetric efficiency will increase.

On the other hand, in the waveforms of the supercharging pressure during two-cylinder operation, there are only two local maximum points of the supercharging pressure in a single cycle, which corresponds to the exhaust strokes of the two operating cylinders that are separated by an interval of 360 degrees. Further, the exhaust stroke of one of the operating cylinders and the intake stroke of the other operating cylinder deviate from each other by 540 degrees. Therefore, a local maximum point of the supercharging pressure is separated by a large amount from an opening period of the intake valve and, conversely, a negative effect that lowers the volumetric efficiency due to the local minimum point of the supercharging pressure entering the opening period of the intake valve is larger.

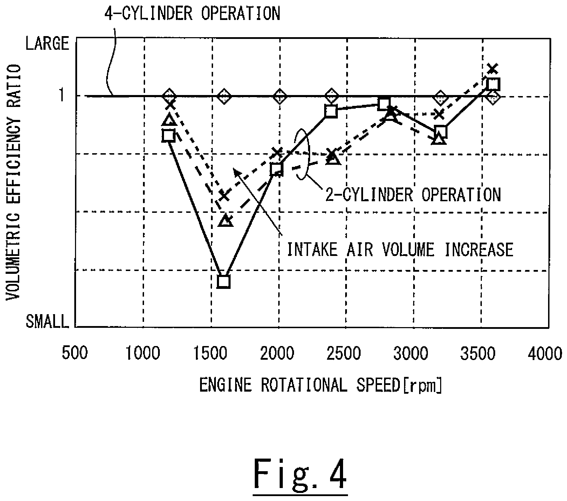

In Fig. 4, a plurality of polygonal lines are drawn that show the relation between the volumetric efficiency ratio and the engine rotational speed in two-cylinder operation in a case where the volumetric efficiency in four-cylinder operation is taken as 1. The capacity of the intake manifold 14c is different for each polygonal line. That is, the plurality of polygonal lines shown in Fig. 4 represent results obtained when a plurality of the intake manifolds 14c having different capacities to each other were prepared and the relation between the volumetric efficiency ratio and the engine rotational speed in two-cylinder operation was determined for each capacity.

Based on Fig. 4, it is found that, over approximately the entire region of the engine rotational speed, the volumetric efficiency decreases in two-cylinder operation compared to four-cylinder operation. In the example illustrated in Fig. 4, there is a noticeable decrease in the volumetric efficiency in a normal rotational speed region of a diesel engine, and there is a small decrease in the volumetric efficiency in a high rotation region and an extremely low rotation region. The reason that the volumetric efficiency changes in this way depending on the engine rotational speed is that a time lag from a time that the exhaust valve opens until the supercharging pressure rises, particularly, a time lag before exhaust gas arrives at the turbine 22b, changes depending on the engine rotational speed, and consequently the phase of a local maximum point of the supercharging pressure with respect to the opening period of the intake valve changes. A decrease in the volumetric efficiency in a diesel engine leads to a decrease in EGR gas that enters the cylinders, and consequently raises the in-cylinder temperature and increases cooling loss.

### 3. Pulsation Suppression Control

Differences in the capacity of the intake manifold 14c result in differences arising in the volume of intake air that actually flows along a flow path from the outlet of the turbo-compressor 22a to the intake valve. As will be understood by comparing the respective waveforms shown in the above-described Fig. 3, the larger that the intake air volume is, the greater the degree to which attenuation of intake air pulsations proceeds and the smaller that the amplitude of local minimum points of the supercharging pressure in the opening period of the intake valve becomes. Therefore, as shown in the above-described Fig. 4, the larger that the intake air volume is, the greater the degree to which a decrease in the volumetric efficiency that is due to the influence of pulsations is suppressed.

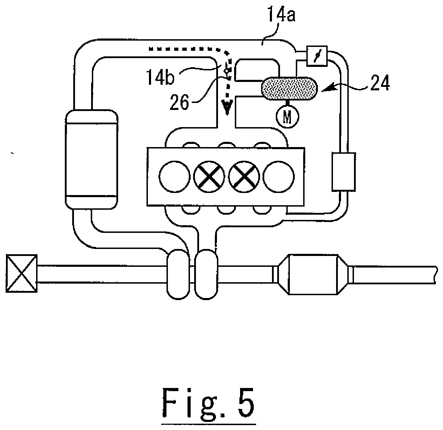

Fig. 5 is a view that illustrates the flow of intake air at a time that the electric supercharger 24 is stopped (or a time of preliminary rotation). In a case where the electric supercharger 24 is stopped or a case where the electric supercharger 24 is performing preliminary rotation (operating at a rotational speed of a level that does not produce an air flow), the bypass valve 26 is placed in a fully open state. By this means, as indicated by a dashed arrow line in Fig. 5, the intake air flows through the bypass passage 14b.

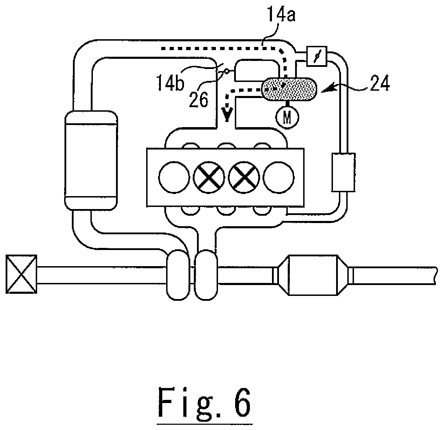

When an assisting operation is performed by the electric supercharger 24, the bypass valve 26 is placed in a fully closed state. An assisting operation is an operation performed by the electric supercharger 24 which has a fast response in order to compensate for turbo lag of the turbo-supercharger 22, and is performed in a case where there is an acceleration request from the driver. Fig. 6 is a view that illustrates the flow of intake air during an assisting operation by the electric supercharger 24. As shown by a dashed arrow line in Fig. 6, during the assisting operation, by placing the bypass valve 26 in a fully closed state, all of the intake air flows through the main intake passage 14a in which the electric supercharger 24 is disposed.

In the case of the system of the embodiment, when the flow path of the intake air shown in Fig. 5 and the flow path of the intake air shown in Fig. 6 are compared, it is found that the flow path that passes through the electric supercharger 24 has a longer total flow path length. Hence, the volume of the intake air that actually flows along the flow path from the outlet of the turbo-compressor 22a to the intake valve is increased by actuating the electric supercharger 24 so that the intake air flows through the main intake passage 14a. However, according to the configuration of the system of the embodiment, there is room to further increase the intake air volume. In the system of the embodiment, by performing pulsation suppression control that operates the electric supercharger 24 and the bypass valve 26 in the following manner, the intake air volume is further increased to suppress pulsations.

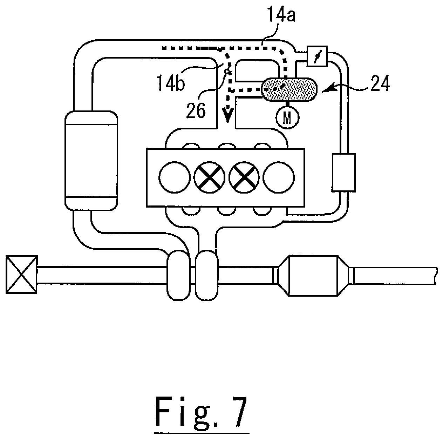

Fig. 7 is a view that illustrates the flow of intake air when pulsation suppression control is performed. According to the pulsation suppression control, the electric supercharger 24 is operated at a rotational speed that is equal to or higher than the speed of preliminary rotation, and the bypass valve 26 is opened. By this means, as indicated by a dashed arrow line in Fig. 7, the intake air flows through both the bypass passage 14b and the main intake passage 14a in which the electric supercharger 24 is disposed.

By realizing the flow of intake air shown in Fig. 7, the total flow path length of the flow path from the outlet of the turbo-compressor 22a to the intake valve is extended by an amount corresponding to the amount of the bypass passage 14b in comparison when performing the assisting operation. The volume of intake air that actually flows through the flow path is increased by an amount corresponding to the amount by which the total flow path length is extended. A certain amount of attenuation occurs in a pulsation before the intake air reaches the intake valve from the outlet of the turbo-compressor 22a. The attenuation of the pulsation is promoted as a result of the intake air volume being increased.

Further, there is a difference in distance between the distance in the main intake passage 14a from the branch point with the bypass passage 14b to the merging point therewith, and the distance in the bypass passage 14b. Consequently, a phase difference arises between a pressure waveform of a pulsation that passes through the main intake passage 14a and a pressure waveform of a pulsation that passes through the bypass passage 14b, that depends on the difference in distance and the wavelengths of the pulsations. At the position at which the bypass passage 14b merges with the main intake passage 14a, mutual interference arises between the pulsations of the two paths between which the phase difference exists, and attenuation of the pulsations is further promoted.

As described above, according to the pulsation suppression control, an effect that promotes attenuation of pulsations is obtained by increasing the intake air volume, and furthermore, an effect that promotes attenuation of pulsations is also obtained by mutual interference. By means of these effects, a decrease in volumetric efficiency that is due to the influence of pulsations is suppressed by implementing the pulsation suppression control when performing a cylinder halting operation.

Note that, it is not necessary to fully open the bypass valve 26 to create the flow of intake air shown in Fig. 7, and it is sufficient to open the bypass valve 26 by even a small amount. It is sufficient for the electric supercharger 24 to rotate to a degree whereby intake air flows from upstream to downstream. Naturally, the electric supercharger 24 may rotate at a rotational speed that is equal to the rotational speed when performing the assisting operation, and in that case intake air may flow backward through the bypass passage 14b. As long as the configuration allows pulsations to be propagated along the two respective paths of the bypass passage 14b and the electric supercharger 24, the above-described effects produced by the pulsation suppression control are obtained.

### 4. Control Procedure

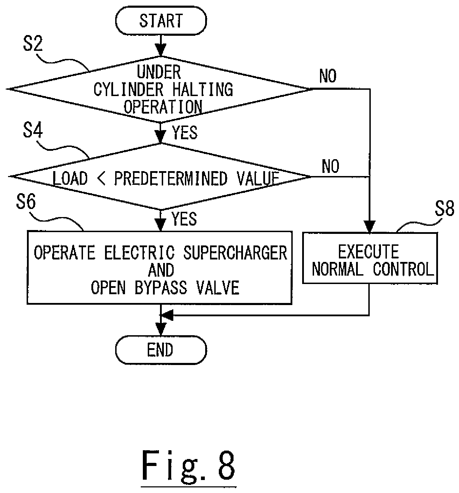

Fig. 8 is a flowchart illustrates a control procedure of the embodiment. A control program corresponding to the control procedure is stored in the memory of the control device 100. The flow of intake air shown in Fig. 7 is realized by controlling the electric supercharger 24 and the bypass valve 26 in accordance with this control procedure.

According to the control procedure shown in Fig. 8, first, the control device 100 checks whether or not the cylinder halting operation is being performed (step S2). A fact that the cylinder halting operation is being performed is one condition for determining that the internal combustion engine 10 is in a specific operating state that requires pulsation suppression control. If the cylinder halting operation is not being performed, the control device 100 performs operation according to normal control (step S8). In the normal control, operation of the electric supercharger 24 and the bypass valve 26 is performed in accordance with a map that takes the engine load and engine rotational speed as parameters. A map for four-cylinder operation and a map for two-cylinder operation are prepared as maps, and the maps are switched depending on whether or not the cylinder halting operation is being performed.

If the cylinder halting operation is being performed, the control device 100 determines whether the load of the internal combustion engine 10 is less than a predetermined value (for example, about 10%) (step S4). The influence of pulsations on the volumetric efficiency decreases relatively as the load of the internal combustion engine 10 increases. At a time of a low load when the influence of pulsations on the volumetric efficiency is large, energy efficiency is increased by suppressing pulsations by performing the pulsation suppression control. However, in a case where the load is large to a certain extent, rather than suppressing pulsations, performing the assisting operation by the electric supercharger 24 improves the energy efficiency of the overall system. Hence, the load being less than a predetermined value is a second condition for determining that the internal combustion engine 10 is in a specific operating state that requires pulsation suppression control. If the load is equal to or greater than the predetermined value, the control device 100 performs operation by normal control (step S8).

In a case where the cylinder halting operation is being performed and the load is less than the predetermined value, the control device 100 performs the pulsation suppression control by actuating the electric supercharger 24 and also opening the bypass valve 26 (step S6). As long as a flow of intake air is secured, the rotational speed of the electric supercharger 24 at this time may be a fixed rotational speed that does not depend on the load.

### 5. Operation of the System

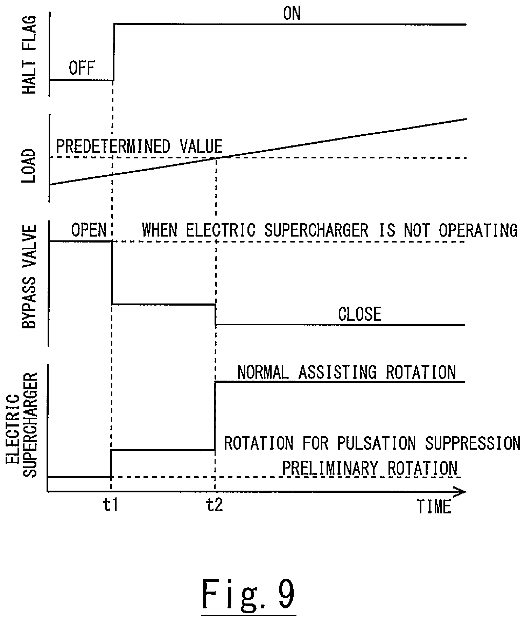

Fig. 9 is a time chart illustrating operation of the system in a case where the above-described control procedure is implemented. A chart on the first (upper) level shows the status of a halt flag that indicates whether or not the cylinder halting operation is being executed. A chart on the second level from the top shows the load. A chart on the third level from the top shows the opening degree of the bypass valve 26. A chart on the fourth level from the top shows the rotational speed of the electric supercharger 24.

According to the time chart, the cylinder halting operation is not performed until a time t1. Further, the load during this period is low, and the assisting operation by the electric supercharger 24 is not being performed. The bypass valve 26 is opened fully, and the electric supercharger 24 is caused to perform preliminary rotation.

When the cylinder halting operation is performed at the time t1, the pulsation suppression control is performed. The bypass valve 26 is opened to a previously set opening degree for pulsation suppression, and the electric supercharger 24 is rotated at a previously set rotational speed for pulsation suppression. The rotational speed for pulsation suppression is set to a lower rotational speed than the rotational speed during an assisting operation. Since an effect that suppresses pulsations will be obtained if intake air passes through the electric supercharger 24, the rotational speed for pulsation suppression may be low, and consumption of energy can thus be suppressed by suppressing the rotational speed. Note that the setting for the rotational speed for pulsation suppression may be changed in accordance with the remaining capacity of the battery.

Subsequently, upon the load reaching a predetermined value at a time t2, the operation mode of the electric supercharger 24 is switched from the pulsation suppressing operation to the assisting operation. The bypass valve 26 is fully closed, and the electric supercharger 24 is rotated at a rotational speed in accordance with the engine load and the engine rotational speed. By switching to the assisting operation by the electric supercharger 24 when the load increases, the efficiency is increased in comparison to the case of continuing the pulsation suppression control.

### 6. Other Embodiments

In the above-described embodiment, whether or not to execute pulsation suppression control is determined based on the load. However, a configuration may be adopted that determines whether or not to execute pulsation suppression control based on the engine rotational speed. Since the phase of a pulsation with respect to the opening period of the intake valve changes depending on the engine rotational speed of the internal combustion engine 10, a position of a local minimum point of the intake air pressure in an opening period of the intake valve also changes depending on the engine rotational speed. Therefore, as shown in Fig. 4 that is described above, a decrease in the volumetric efficiency is noticeable in a specific rotational speed region. Thus, consumption of energy is suppressed by limiting execution of the pulsation suppression control to a rotational speed region in which a decrease in the volumetric efficiency is particularly noticeable.

Although in the above-described embodiment the second cylinder and third cylinder are halted in an inline four-cylinder engine, the total number of cylinders and the number of halted cylinders is not limited according to the present invention. As long as a part of the cylinders of the internal combustion engine are halted, a decrease in volumetric efficiency due to the influence of pulsations is suppressed by performing pulsation suppression control.

In addition, execution of pulsation suppression control also exerts an effect when operating on all cylinders, and not just when performing a cylinder halting operation. There is always a trough in a pulsation of intake air, and the phase of a pulsation with respect to the opening period of the intake valve changes depending on the engine rotational speed of the internal combustion engine 10. Consequently, even when operating on all cylinders, there are cases where, depending on the rotational speed region, a local minimum point of the intake air pressure enters an opening period of the intake valve. For example, in a waveform of the supercharging pressure during four-cylinder operation that is shown in Fig. 3 also, a local minimum point of the intake air pressure due to pulsations is positioned within the opening period of the intake valve. By performing pulsation suppression control in such a case, a decrease in the volumetric efficiency due to the influence of pulsations is suppressed.

Note that, although an electric supercharger is used as the second supercharger in the above-described embodiment, the second supercharger may be a mechanical supercharger that is driven by the internal combustion engine. The rotational speed of the mechanical supercharger is controlled by interposing a clutch between an output shaft of the internal combustion engine and the mechanical supercharger, and adjusting the engagement state of the clutch. Further, the present invention can also be applied to a spark-ignition lean-burn engine, and not just to a diesel engine.

## Claims

1. A control device (100) for an internal combustion engine (10) comprising a plurality of cylinders (#1, #2, #3, #4), a first supercharger (22) that is driven by exhaust gas, a second supercharger (24) that is disposed downstream relative to the first supercharger (22) in an intake passage (14a) and that is driven by a motive power other than exhaust gas, a bypass passage (14b) that bypasses the second supercharger (24), and a bypass valve (26) that opens and closes the bypass passage (14b), the control device (100) **characterized by** comprising:
determination means for determining whether or not the internal combustion engine (10) is in a specific operating state where a local minimum point of a pulsation of an intake air pressure exists within an opening period of an intake valve; and
operation means configured so that, in a case where it is determined by the determination means that the internal combustion engine (10) is in the specific operating state, the operation means actuates the second supercharger (24) at a previously set rotational speed for pulsation suppression and also opens the bypass valve (26) to a previously set opening degree for pulsation suppression.

2. The control device (100) for an internal combustion engine (10) according to claim 1, wherein the operation means is configured so as to, in acceleration, close the bypass valve (26) and actuate the second supercharger (24) to thereby assist supercharging by the first supercharger (22) by means of supercharging by the second supercharger (24), and in a case where it is determined by the determination means that the internal combustion engine (10) is in the specific operating state, cause the second supercharger (24) to operate at a lower rotational speed than a rotational speed in a case of assisting supercharging by the first supercharger (22).

3. The control device (100) for an internal combustion engine (10) according to claim 1 or 2, wherein:
the internal combustion engine (10) further comprises a cylinder halting device (60) that halts one or more cylinders (#2, #3) among the plurality of cylinders (#1, #2, #3, #4); and
the determination means determines that the internal combustion engine (10) is in the specific operating state when it is determined that the one or more cylinders (#2, #3) are being halted by the cylinder halting device (60).

4. The control device (100) for an internal combustion engine (10) according to claim 3, wherein:
the internal combustion engine (10) comprises four cylinders (#1, #2, #3, #4); and
the cylinder halting device halts two cylinders (#2, #3).

5. The control device (100) for an internal combustion engine (10) according to any one of claims 1 to 4, wherein the determination means determines that the internal combustion engine (10) is in the specific operating state when it is determined that the internal combustion engine (10) is rotating at a speed that is in a predetermined rotational speed region.

6. The control device (100) for an internal combustion engine (10) according to any one of claims 1 to 5, wherein, as a condition for determining that the internal combustion engine (10) is in the specific operating state, the determination means confirms that a load of the internal combustion engine (10) is less than a predetermined value.

7. The control device (100) for an internal combustion engine (10) according to claim 6, wherein the operation means is configured so that, in a case where the load of the internal combustion engine (10) is equal to or greater than the predetermined value, the operation means closes the bypass valve (26) and causes the second supercharger (24) to operate at a rotational speed that is in accordance with the load.

8. The control device (100) for an internal combustion engine (10) according to any one of claims 1 to 7, wherein the second supercharger (24) is an electric supercharger that is driven by an electric motor (24b).

## Patentansprüche

1. Steuervorrichtung (100) für einen Verbrennungsmotor (10) mit mehreren Zylindern (# 1, # 2, # 3, # 4), einem ersten Verdichter (22), der durch Abgas angetrieben wird, einem zweiten Verdichter (24), der gegenüber dem ersten Verdichter (22) stromabwärts in einem Ansaugkanal (14a) angeordnet ist und der von einer anderen Antriebskraft als Abgas angetrieben wird, einen Umgehungskanal (14b), der den zweiten Verdichter (24) umgeht, und ein Umgehungsventil (26), das den Umgehungskanal (14b) öffnet und schließt, wobei die Steuervorrichtung (100) **gekennzeichnet ist durch**:
eine Bestimmungseinrichtung zur Bestimmung, ob sich der Verbrennungsmotor (10) in einem spezifischen Betriebszustand, in dem ein lokaler Minimalpunkt einer Pulsation eines Ansaugluftdrucks während einer Öffnungsperiode eines Einlassventils existiert, befindet; und
eine Betätigungseinrichtung, die dafür angepasst ist, dass in einem Fall, in dem durch die Bestimmungseinrichtung bestimmt wird, dass sich der Verbrennungsmotor (10) in dem spezifischen Betriebszustand befindet, die Betätigungseinrichtung den zweiten Verdichter (24) mit einer zuvor eingestellten Drehzahl für eine Pulsationsunterdrückung betätigt und ebenso das Umgehungsventil (26) zu einem zuvor eingestellten Öffnungsgrad für eine Pulsationsunterdrückung öffnet.

2. Steuervorrichtung (100) für einen Verbrennungsmotor (10) nach Anspruch 1, wobei die Betätigungseinrichtung dafür angepasst ist, dass sie, bei Beschleunigung, das Umgehungsventil (26) schließt und den zweiten Verdichter (24) betätigt, wodurch ein Verdichten durch den ersten Verdichter (22) durch ein Verdichten durch den zweiten Verdichter (24) unterstützt wird, und in einem Fall, in dem durch die Bestimmungseinrichtung bestimmt ist, dass sich der Verbrennungsmotor (10) in dem spezifischen Betriebszustand befindet, den zweiten Verdichter (24) bei einer niedrigeren Drehzahl betätigt, als eine Drehzahl in einem Fall, in dem ein Verdichten durch den ersten Verdichter (22) unterstützt wird.

3. Steuervorrichtung (100) für einen Verbrennungsmotor (10) nach Anspruch 1 oder 2, wobei:
der Verbrennungsmotor (10) ferner eine Zylinderaussetzvorrichtung (60) aufweist, die einen oder mehrere Zylinder (# 2, # 3) der mehreren Zylindern (# 1, # 2, # 3, # 4) aussetzt; und
die Bestimmungseinrichtung bestimmt, dass sich der Verbrennungsmotor (10) in dem spezifischen Betriebszustand befindet, wenn bestimmt ist, dass der eine oder mehrere Zylinder (# 2, # 3) durch die Zylinderaussetzvorrichtung (60) ausgesetzt sind.

4. Steuervorrichtung (100) für eine Verbrennungsmotor (10) nach Anspruch 3, wobei:
der Verbrennungsmotor (10) vier Zylinder (# 1, # 2, # 3, # 4) aufweist; und
die Zylinderaussetzvorrichtung zwei Zylinder (# 2, # 3) aussetzt.

5. Steuervorrichtung (100) für einen Verbrennungsmotor (10) nach einem der Ansprüche 1 bis 4, wobei die Bestimmungseinrichtung bestimmt, dass sich der Verbrennungsmotor (10) in dem spezifischen Betriebszustand befindet, wenn bestimmt ist, dass sich der Verbrennungsmotor (10) mit einer Geschwindigkeit, die sich in einem vorbestimmten Drehzahlbereich befindet, dreht.

6. Steuervorrichtung (100) für einen Verbrennungsmotor (10) nach einem der Ansprüche 1 bis 5, wobei als eine Bedingung zur Bestimmung, dass sich der Verbrennungsmotor (10) in dem spezifischen Betriebszustand befindet, die Bestimmungseinrichtung bestätigt, dass eine Last des Verbrennungsmotors (10) geringer als ein vorbestimmter Wert ist.

7. Steuervorrichtung (100) für einen Verbrennungsmotor (10) nach Anspruch 6, wobei die Betätigungseinrichtung dafür angepasst ist, dass in einem Fall, in dem die Last des Verbrennungsmotors (10) gleich oder größer als der vorbestimmte Wert ist, die Betätigungseinrichtung das Umgehungsventil (26) schließt und den zweiten Verdichter (24) mit einer Drehzahl entsprechend der Last betätigt.

8. Steuervorrichtung (100) für einen Verbrennungsmotor (10) nach einem der Ansprüche 1 bis 7, wobei der zweite Verdichter (24) ein elektrischer Verdichter ist, der von einem Elektromotor (24b) angetrieben wird.

## Revendications

1. Dispositif de commande (100) destiné à un moteur à combustion interne (10) comprenant une pluralité de cylindres (#1, #2, #3, #4), un premier compresseur d'alimentation (22) qui est entraîné par le gaz d'échappement, un second compresseur d'alimentation (24) qui est disposé en aval par rapport au premier compresseur d'alimentation (22), dans un passage d'admission (14a) et qui est entraîné par une force motrice autre que le gaz d'échappement, un passage de dérivation (14b) qui contourne le second compresseur d'alimentation (24), et une soupape de dérivation (26) qui ouvre et ferme le passage de dérivation (14b), le dispositif de commande (100) étant **caractérisé en ce qu'**il comprend :
un moyen de détermination destiné à déterminer si le moteur à combustion interne (10) se trouve ou non dans un état de fonctionnement spécifique où il existe un point minimum local de pulsation de pression d'air d'admission à l'intérieur d'une période d'ouverture d'une soupape d'admission ; et
un moyen d'actionnement conçu de telle sorte que, dans le cas où il est déterminé par le moyen de détermination que le moteur à combustion interne (10) se trouve dans l'état de fonctionnement spécifique, le moyen d'actionnement actionne le second compresseur d'alimentation (24) à une vitesse de rotation préalablement réglée à des fins de suppression de pulsations et ouvre également la soupape de dérivation (26) à un degré d'ouverture préalablement réglé à des fins de suppression de pulsations.

2. Dispositif de commande (100) destiné à un moteur à combustion interne (10), selon la revendication 1, dans lequel le moyen d'actionnement est conçu de manière, en cours d'accélération, à fermer la soupape de dérivation (26) et à actionner le second compresseur d'alimentation (24) afin d'aider à la suralimentation par le premier compresseur d'alimentation (22) au moyen d'une suralimentation par le second compresseur d'alimentation (24), et dans le cas où il est déterminé par le moyen de détermination que le moteur à combustion interne (10) se trouve dans l'état de fonctionnement spécifique, à faire que le second compresseur d'alimentation (24) fonctionne à une vitesse de rotation inférieure à une vitesse de rotation en cas d'aide à la suralimentation par le premier compresseur d'alimentation (22).

3. Dispositif de commande (100) destiné à un moteur à combustion interne (10), selon la revendication 1 ou 2, dans lequel :
le moteur à combustion interne (10) comprend en outre un dispositif d'arrêt de cylindres (60) qui arrête un ou plusieurs cylindre(s) (#2, #3) parmi la pluralité de cylindres (#1, #2, #3, #4) ; et
le moyen de détermination détermine que le moteur à combustion interne (10) se trouve dans l'état de fonctionnement spécifique, lorsqu'il est déterminé que le(s) cylindre(s) (#2, #3) est ou sont en cours d'arrêt par le dispositif d'arrêt de cylindres (60).

4. Dispositif de commande (100) destiné à un moteur à combustion interne (10), selon la revendication 3, dans lequel :
le moteur à combustion interne (10) comprend quatre cylindres (#1, #2, #3, #4) ; et
le dispositif d'arrêt de cylindres arrête deux cylindres (#2, #3).

5. Dispositif de commande (100) destiné à un moteur à combustion interne (10), selon l'une quelconque des revendications 1 à 4, dans lequel le moyen de détermination détermine que le moteur à combustion interne (10) se trouve dans l'état de fonctionnement spécifique, lorsqu'il est déterminé que le moteur à combustion interne (10) tourne à une vitesse qui se situe dans une région de vitesse de rotation prédéterminée.

6. Dispositif de commande (100) destiné à un moteur à combustion interne (10), selon l'une quelconque des revendications 1 à 5, dans lequel, en tant que condition permettant de déterminer que le moteur à combustion interne (10) se trouve dans l'état de fonctionnement spécifique, le moyen de détermination confirme qu'une charge du moteur à combustion interne (10) est inférieure à une valeur prédéterminée.

7. Dispositif de commande (100) destiné à un moteur à combustion interne (10), selon la revendication 6, dans lequel le moyen d'actionnement est conçu de manière que, dans le cas où la charge du moteur à combustion interne (10) est supérieure ou égale à la valeur prédéterminée, le moyen d'actionnement ferme la soupape de dérivation (26) et fasse que le second compresseur d'alimentation (24) fonctionne à une vitesse de rotation qui est en conformité avec la charge.

8. Dispositif de commande (100) destiné à un moteur à combustion interne (10), selon l'une quelconque des revendications 1 à 7, dans lequel le second compresseur d'alimentation (24) est un compresseur d'alimentation électrique qui est entraîné par un moteur électrique (24b).
